# EUROPÄISCHE PATENTSCHRIFT

(11) **EP 3 172 350 B1**
(45) Veröffentlichungstag und Bekanntmachung des Hinweises auf die Patenterteilung: **29.08.2018**
(21) Anmeldenummer: 15744142.9
(22) Anmeldetag: 14.07.2015
(51) Int. Cl.: C22C 21/12, C22C 21/14, C22C 21/16, C22C 21/18, C22F 1/057

(54) **KOLBEN FÜR EINEN VERBRENNUNGSMOTOR, VERFAHREN ZUR HERSTELLUNG EINES KOLBENS FÜR EINEN VERBRENNUNGSMOTOR UND VERWENDUNG EINER ALUMINIUMLEGIERUNG FÜR EIN LAGERELEMENT EINES VERBRENNUNGSMOTORS**
PISTON FOR A COMBUSTION ENGINE, PROCESS FOR ITS MANUFACTURE AND THE USE OF AN ALUMINIUM ALLOY FOR A BEARING ELEMENT OF A COMBUSTION ENGINE
PISTON POUR UN MOTEUR A COMBUSTION, SON PROCÉDÉ DE FABRICATION ET UTILISATION D'UN ALLIAGE D'ALUMINIUM POUR LA UN ÉLÉMENT DE PALIER D'UN MOTEUR À COMBUSTION

(30) Priorität: 23.07.2014 DE 102014214377
(43) Veröffentlichungstag der Anmeldung: 31.05.2017
(73) Patentinhaber: Federal-Mogul Nürnberg GmbH, 90441 Nürnberg (DE)
(72) Erfinder: LADES, Klaus, 90459 Nürnberg (DE)
(74) Vertreter: Hoffmann Eitle
(86) Internationale Anmeldenummer: PCT/EP2015/066053
(87) Internationale Veröffentlichungsnummer: WO 2016/012306

(56) Entgegenhaltungen:
- US-A1- 2009 208 362
- G Cantore ET AL: "Validation of a combined CFD/FEM methodology for the evaluation of thermal load acting on aluminum alloy pistons through hardness measurements in internal combustion engines INTRODUCTION", , 1. Januar 2011 (2011-01-01), XP0055211034, Gefunden im Internet: URL:http://www.teksidaluminum.com/pdf/29-1 -2.pdf [gefunden am 2015-09-03]
- OZBEK ET AL: "A study on the re-solution heat treatment of AA 2618 aluminum alloy", MATERIALS CHARACTERIZATION, ELSEVIER, NEW YORK, NY, US, Bd. 58, Nr. 3, 9. Februar 2007 (2007-02-09), Seiten 312-317, XP005883345, ISSN: 1044-5803

## Beschreibung

### Technisches Gebiet

Die vorliegende Erfindung betrifft einen Kolben für einen Verbrennungsmotor, ein Verfahren zur Herstellung eines Kolbens für einen Verbrennungsmotor und die Verwendung einer Aluminiumlegierung für ein Lagerelement, bevorzugt eine Kolbenbuchse, eines Verbrennungsmotors.

### Stand der Technik

Die Verbindung zwischen hin- und hergehenden Kolben eines Verbrennungsmotors und der sich drehenden Kurbelwelle erfolgt durch Pleuel, die an ihren beiden Enden Bohrungen oder sogenannte Augen aufweisen. Mittels einer dieser Bohrungen wird der Pleuel dadurch an den Kolben befestigt, dass ein sogenannter Kolbenbolzen durch geeignete Bohrungen des Kolbens sowie durch das Auge des Pleuels gesteckt wird. Das andere, größere Auge des Pleuels befindet sich an einem sogenannten Hubzapfen der Kurbelwelle. Durch die Rotation des Hubzapfens der Kurbelwelle wird der Pleuel ausgelenkt und das kleinere Pleuelauge führt eine Drehbewegung um die Kolbenbolzenachse aus. Im befestigten Zustand kann der Kolben bezüglich des Pleuels zumindest geringfügig verkippen. Diese Kippbewegung ist von dem Bolzenversatz, der Schwerpunktlage und dem Kurbelwinkel abhängig.

Aufgrund dieser möglichen Dreh- und Kippbewegung des Kolbens bezüglich des Pleuels kann es auch zu Verdrehungen des Kolbenbolzens in der Bohrung des Kolbens kommen. Diese tritt insbesondere bei relativ hohen Verbrennungsbrücken auf, bei denen die meist schmalere Lagerstelle im kleinen Pleuelauge die höchsten Reibungskräfte aufweist. Es gibt jedoch auch sogenannte Klemmpleuel, bei denen diese Bewegungen immer zwischen Bolzen und Kolben stattfinden. Um diesen Gegebenheiten Rechnung zu tragen, werden üblicherweise sogenannte Kolbenbuchsen zur Aufnahme des Kolbenbolzens in die Bohrung des Kolbens eingesetzt. Kolbenbuchsen unterliegen in Folge des Zünddrucks einer sehr starken Beanspruchung hinsichtlich Temperatur-, Druck- beziehungsweise Stoßbelastung.

Aus werkstofflicher Sicht wird diesen hohen Beanspruchungen Rechnung getragen, indem die Buchsen herkömmlicherweise aus Buntmetallen, beispielsweise Messing oder Bronze bestehen. Diese Buchsen unterliegen jedoch einer gewissen Fressneigung mit dem Kolbenbolzen. Dies kann äußerst zerstörerische Ausmaße annehmen. Hierbei sind sowohl selbstausheilende Mikroreiben, die jedoch unerwünscht sind, als auch ein vollständiges Fressen möglich, was zum Ausfall des gesamten Bauteils und ferner sogar des gesamten Verbrennungsmotors führen kann. Ein Lösungsansatz war das Vorsehen von Formbohrung unterschiedlichster Ausführung in den Buchsen. Ferner wurde auch versucht, die Kolbenbolzen mit PVD/CVD-Schichten beispielsweise mit DLC (diamondlike carbon), WCC (Wolfram-Carbit-Kohlenstoff) oder verschiedenen galvanischen Schichten zu beschichten. Derartige Maßnahmen sind jedoch kostspielig. Darüber hinaus ist bereits das Buntmetall der Buchsen vergleichsweise teuer.

Bezüglich der kritischen Werkstoffauswahl für Kolbenbuchsen zeigt der Stand der Technik verschiedene Alternativen auf.

Die DE 10 2004 013 548 A1 beschreibt einen Ansatz zur wirtschaftlicheren Herstellung einer Kolbenbuchse, indem herkömmlicherweise geknetete Messinglegierungen durch lediglich gegossene und spanend fertigbearbeitete Messinglegierungen ersetzt werden. So wird eine Kolbenbuchse aus einer Messinglegierung mit 30 bis 32,2 Gew.-% Zink, 1,8 bis 2,2 Gew.-% Aluminium, 1,8- 2,2 Gew.-% Mangan, 1,4 - 2,2 Gew.-% Nickel, 1,4 - 2,0 Gew.-% Eisen sowie gegebenenfalls verunreinigungsbedingten Bestandteilen, jeweils höchstens 0,2 Gew.-% in der Summe aber höchstens 1 Gew.-%, und mit Rest Kupfer beschrieben. Die Kolbenbuchse wird dabei als Längsabschnitt von einem stranggegossenen Rohr, das zuvor an seine Außenseite spanend bearbeitet wurde, abgelängt und ist ohne eine knetende Bearbeitung freifallend verwendbar ist.

Einen weiteren Ansatz zur Kostenreduzierung des Kolbenbuchsenmaterials beschreibt die DE 103 06 694 A1 in der anstatt eines Buntmetalls, Grauguss für die Kolbenbuchse verwendet wird. Vorteile werden dadurch erzielt, dass Grauguss selbst äußerst kostengünstig verfügbar ist und nicht mit separaten Beschichtungen oder Formbohrungen versehen werden muss. Als besonders bevorzugtes Material wird "Ni-Resist", ein austenitisches Gusseisenmaterial mit hohem Nickelgehalt beschrieben. Nickel als Legierungsbestandteil dient der Kornfeinung und verhindert die Ausbildung einer groben Kornstruktur. Ferner zeichnet sich "Ni-Resist" durch hohe Korrosionsbeständigkeit und gute Abriebeigenschaften aus.

Weitere Materialien zum Einsatz in Kolbenbuchsen in Verbrennungsmotoren werden zum Beispiel beschrieben in: EP 0 546 301 A1, die eine Kolbenbuchse aus einsatzgehärtetem Stahl in geschliffener Ausführung offenbart, und US 4291614 A die allgemein vorschlägt Kolbenbuchsen aus hochfestem Material, das Belastungen durch den Kolbenbolzen standhält, zum Beispiel Stahl, Titan, Lagerbronze oder sogar hochfesten Aluminiumlegierungen, zu fertigen.

Die DE 10 2005 001 537 B3 beschreibt einen Gleitlagerverbundwerkstoff mit einer Trägerschicht aus Stahl und einer darauf unlösbar aufgebrachten Gleitschicht aus einer bleifreien Aluminiumlagerlegierung, bestehend aus 4,4-6 Gew.-% Zink, 1,0- < 2, 5 Gew.-% Wismut, 1,0-2,0 Gew.-% Silizium, 0,8-1,2 Gew.-% Kupfer und 0,2-0,8 Gew.-% Magnesium sowie gegebenenfalls Titan, Nickel, Mangan, Zinn jeweils bis höchstens 0,2 Gew.-% und weiter gegebenenfalls Eisen bis höchstens 0,6 Gew.-% und weiter gegebenenfalls verunreinigungsbedingten Zusätzen von jeweils höchstens 0,1 Gew,-%, deren Gesamtmenge in der Summe aber nicht mehr als 1 Gew.-% beträgt, wobei die Aluminiumlagerlegierung einen mit Zink übersättigten Aluminium-Mischkristall bildet, in dem Zink durch Lösungsglühen und anschließendes Abschrecken in feiner Verteilung vorliegt. Ähnliche, in Beziehung stehende Gleitlagerverbundwerkstoffe beschreiben die DE 103 43 618 B3 sowie die DE 10 2007 033 563 A1. In beiden Schriften wird zudem die Verwendung der entsprechenden Gleitlagerverbundwerkstoffe für Kolbenbolzenbuchsen, die den Kolben in Verbrennungsmotoren lagern, genannt.

### Zusammenfassung der Erfindung

Aufgabe der vorliegenden Erfindung ist es, einen Kolben für einen Verbrennungsmotor mit einer verbesserten Kolbenbuchse bereitzustellen. Ferner ist es eine Aufgabe der vorliegenden Erfindung ein Verfahren zur Herstellung eines Kolbens für einen Verbrennungsmotor zu schaffen und die Verwendung einer Aluminiumlegierung für ein Lagerelement eines Verbrennungsmotors zu beschreiben.

Der vorliegenden Erfindung liegt der Gedanke zugrunde, ein neuartiges Material zur Herstellung hochbelasteter Kolbenbuchsen zu beschreiben, das eine besonders kostengünstige Herstellung von Kolbenbuchsen mit deutlich verbesserten Verschleißeigenschaften vorsieht. Es ist ein weiterer Gedanke der vorliegenden Erfindung, die Verwendung, einer aus anderen technischen Gebieten, insbesondere der Luftfahrtindustrie, bekannten Aluminiumlegierung für den Einsatz in hochbelasteten Lagerelementen, insbesondere Kolbenbuchsen, vorzuschlagen.

Die Aufgabe wird durch Merkmale des Anspruchs 1 gelöst. Vorteilhafte Ausführungen und Anwendungen finden sich in den diesbezüglichen Unteransprüchen 2 bis 6 und der folgenden Beschreibung.

Der Kolben für einen Verbrennungsmotor weist eine Kolbenbuchse bzw. Nabenbuchse zur Aufnahme eines Kolbenbolzens auf und ist dadurch gekennzeichnet, dass die Kolbenbuchse aus einer Aluminiumlegierung der Legierungsserie 2xxx, hergestellt wird, die Kupfer (Cu) 1,9 bis maximal 2,7 Gew.-%, Magnesium (Mg) 1,3 bis maximal 1,8 Gew.-%, Eisen (Fe) 0,9 bis maximal 1,3 Gew.-%, Nickel (Ni) 0,9 bis maximal 1,2 Gew.-%, Mangan (Mn) bis maximal 0,2 Gew.-%, Silizium (Si) 0,1 bis maximal 0,3 Gew.-%, Titan (Ti) 0,04 bis maximal 0,1 Gew.-%, Zink (Zn) bis maximal 0,1 Gew.-% und als Rest Aluminium und nicht zu vermeidende Begleit- und Verunreinigungselemente aufweist. Dabei kann die Kolbenbuchse vollständig oder lediglich teilweise aus der Aluminiumlegierung bestehen. Denkbar wären dabei auch Beschichtungen mit der Aluminiumlegierung. Hierdurch wird in besonders vorteilhafter Weise eine hohe Festigkeit bei erhöhten Temperaturen gewährleistet. Ferner gilt für Kolbenbuchsen aus einer Aluminiumlegierung, dass die Materialkosten im Vergleich zu dem bislang verwendeten Messing deutlich geringer sind.

Es sei ferner erwähnt, dass die für die oben genannten Legierungselemente angegebenen Bereiche und Grenzen miteinander kombiniert werden können. Mit anderen Worten können insbesondere lediglich einige der genannten Untergrenzen vorgesehen sein.

Eine Aluminiumlegierung aus der Serie 2xxx wird insbesondere wegen der Aushärtbarkeit und der Warmfestigkeit, also der hohen Festigkeit bei erhöhten Temperaturen, bevorzugt. Ferner sei erwähnt, dass diese Legierungsserie die höchsten Warmfestigkeitswerte aller Knetlegierungen und die niedrigsten Relaxations- und/oder Kriechraten aufweist.

Eine bevorzugte Aluminiumlegierung kann gemäß ihrem Hauptlegierungsbestandteil Zink aus der Legierungsserie 7xxx stammen. Bei Aluminiumlegierungen dieser Serie handelt es sich um ausscheidungshärtbare Aluminiumlegierungen, die in Verbindung mit einer Wärmebehandlung eine hohe Festigkeit und gute Materialermüdungseigenschaften erreichen. Genauer gesagt, kann bei Legierungen der 7xxx-Serie eine Ausscheidungshärtung zum Beispiel durch die Bildung von MgZn₂-Phasen erreicht werden. Die erfindungsgemäße Kolbenbuchse zeichnet sich durch eine hohe Verschleißfestigkeit in dem hochbelasteten Bereich zwischen Kolbenbolzen und Kolbenbuchse und der Verwendung eines kostengünstigen, technologisch gut beherrschbaren Kolbenbuchsenmaterials aus. Der Legierungstyp ist weitgehend beständig gegenüber den im Motorbetrieb auftretenden korrosiven Medien.

Alternativ kann die Aluminiumlegierung eine Legierung der Legierungsserie 6xxx sein. Bei dieser Serie ist Magnesium der Hauptlegierungsbestandteil und eine Ausscheidungshärtung kann zum Beispiel über Mg₂Si-Phasen erreicht werden.

Bevorzugt beträgt die Summe der Elemente Silizium und Eisen in der Aluminiumlegierung des Kolbens etwa 0,8 Gew.-%.

Ferner ist es bevorzugt, dass die Summe der Elemente Zirkonium und Titan in der Aluminiumlegierung des Kolbens etwa 0,08 bis etwa 0,25 Gew.-% beträgt.

In einer bevorzugten Ausführungsvariante des Kolbens der vorliegenden Erfindung ist die Aluminiumlegierung der Kolbenbuchse eine wärmebehandelte Aluminiumlegierung und weiter bevorzugt eine lösungsgeglühte und ausscheidungsgehärtete Aluminiumlegierung, wobei es besonders bevorzugt wird, dass die Aluminiumlegierung der Kolbenbuchse eine T6 oder T7 wärmebehandelte Aluminiumlegierung ist. Im Rahmen des Lösungsglühens verändert sich das Gefüge in vorteilhafter Weise durch Diffusionsprozesse. Insbesondere runden sich die primären Phasen ein und werden dadurch feiner, was für die mechanischen Eigenschaften des hergestellten Bauteils positiv ist.

Die Wärmebehandlung verleiht der erfindungsgemäßen Aluminiumlegierung insbesondere eine hohe Festigkeit und Verschleißbeständigkeit, die sie zur Verwendung in hochbelasteten Kolbenbuchsen geeignet erscheinen lässt. Zunächst wird die Legierung bei entsprechenden Temperaturen lösungsgeglüht. Ziel ist es, einen möglichst homogenen Werkstoff dadurch zu erzeugen, dass ein Großteil der zugesetzten Legierungselemente durch Temperaturerhöhung in Lösung gebracht wird und sich ein Aluminiummischkristall bildet. Diese feste Lösung wird dann durch Abschrecken der Aluminiumlegierung auf Raumtemperatur eingefroren, sodass ein übersättigter Mischkristall vorliegt und die homogene Mikrostruktur trotz abnehmender Löslichkeit bei Raumtemperatur erhalten bleibt. Anschließend wird der so erzeugte übersättigte Mischkristall kontrolliert bei erhöhten Temperaturen (jedoch niedrigeren Temperaturen als beim Lösungsglühen) für einige Stunden warm ausgelagert. Diese Zufuhr thermischer Energie ermöglicht eine kontrollierte Ausscheidung von Legierungselementen aus dem übersättigten Mischkristall. In diesem Prozess bilden Legierungen der 7xxx-Serie beispielsweise MgZn₂-Ausscheidungsphasen. In Abhängigkeit der Durchführung des Lösungsglühens sowie des Warmauslagerns können diese Ausscheidungsphasen in vielfältigen Morphologien, Größen und Verteilungen vorliegen. Dabei spielt insbesondere die Teilchengröße eine besondere Rolle und es ist das Ziel der Ausscheidungshärtung eine Teilchengröße einzustellen bei der die Festigkeitszunahme ein Maximum durchläuft. Die bevorzugte Wärmebehandlung ist daher insbesondere vorteilhaft, da sie der Kolbenbuchse des erfindungsgemäßen Kolbens eine hohe mechanische Festigkeit und zugleich eine hohe Verschleißbeständigkeit verleiht.

Eine weitere Aufgabe der vorliegenden Erfindung ist es, ein Verfahren zur Herstellung eines Kolbens für einen Verbrennungsmotor mit einer Kolbenbuchse bzw. einer Nabenbuchse bereitzustellen.

Diese Aufgabe wird durch die Merkmale des Anspruchs 7 gelöst. Vorteilhafte Ausführungen und Anwendungen finden sich in den diesbezüglichen Unteransprüchen 8 bis 11 und der folgenden Beschreibung.

Das Verfahren zur Herstellung eines Kolbens für einen Verbrennungsmotor umfasst die Schritte: Stranggießen eines Bolzens aus einer Aluminiumlegierung, Ziehen eines Rohres aus dem Bolzen, Wärmebehandlung des Rohres, Fertigung von Kolbenbuchsen aus dem Rohr, zerstörungsfreie Materialprüfung, Einbau der Kolbenbuchsen in Kolbenbolzenbohrungen und Feinbearbeitung der Geometrie der Bolzenbohrungen.

Mit dem erfindungsgemäßen Verfahren zur Herstellung eines Kolbens lässt sich ein besonders zuverlässiger und ausfallsicherer Kolben, bei dem eine Verbindung zwischen Pleuel und Kolben über eine Kolbenbuchse und einen Kolbenbolzen erreicht wird, herstellen. Durch das Vorsehen einer Kolbenbuchse aus einer entsprechenden Aluminiumlegierung können Schäden beim Betrieb eines Verbrennungsmotors, insbesondere das Fressen des Kolbenbolzens oder ein Ermüdungsbruch der Kolbennabe verhindert werden. Zudem erlaubt das erfindungsgemäße Verfahren eine besonders kostengünstige Herstellung eines Kolbens mit Kolbenbuchse für einen Verbrennungsmotor.

In einer bevorzugten Ausführungsvariante des Verfahrens wird der Bolzen aus der zuvor beschriebenen Aluminiumlegierung gegossen und die mit der Legierung assoziierten technischen Vorteile verwirklicht. Die vorgeschlagenen Legierungen weisen eine hervorragende Bearbeitbarkeit auf.

In einer weiteren, bevorzugten Ausführungsvariante des Verfahrens wird das Rohr einer Wärmebehandlung zur Einstellung eines feineren, sphäroidisierten Mikrogefüges unterzogen.

Ein feinkörniges Gefüge ist vorteilhaft darin, dass es die mechanischen Eigenschaften des Rohrs und der daraus hergestellten Kolbenbuchse erheblich verbessert und insbesondere die Festigkeit steigert.

Es ist weiter bevorzugt, dass das Ziehen des Rohres ein Kaltverformungsprozess ist.

Durch diesen Kaltverformungsprozess wird die Zahl von Versetzungen im Werkstoff und somit dessen Festigkeit erhöht, was besonders vorteilhaft für den Einsatz in einer stark beanspruchten Kolbenbuchse ist.

In einer weiteren Ausführungsvariante ist es bevorzugt, dass die Kolbenbuchsen durch Querpressen oder Längspressen eingebaut werden. Hierbei sind die vorgeschlagenen Legierungstypen besonders vorteilhaft, weil durch deren vergleichsweise hohe thermische Ausdehnungskoeffizienten ein deutlich höherer Kraftschluss erreicht wird als bei den standardmäßig verwendeten Messingbuchsen und dadurch eine Herausdrehen der Buchsen im Betrieb verhindert wird.

Besonders vorteilhaft ist die Tatsache, dass der Herstellprozess eine 100%ige zerstörungsfreie Materialprüfung der gezogenen Rohre ermöglicht.

Eine abschließende Aufgabe der Erfindung besteht darin, eine neuartige Verwendung einer Aluminiumlegierung für ein Lagerelement, bevorzugt eine Kolbenbuchse eines Verbrennungsmotors, vorzusehen.

Diese Aufgabe wird durch die Merkmale des Anspruchs 12 und 13 gelöst.

Die vorgenannten Aluminiumlegierung waren bis zum Anmeldetag lediglich für Anwendung in der Luftfahrindustrie bekannt, nicht jedoch für hochbelastete Lagerelemente, insbesondere Kolbenbuchsen, in Verbrennungsmotoren. Damit beschreibt die vorliegende Erfindung eine neue Anwendung dieser Aluminiumlegierungen. Deren Verwendung, bevorzugt für Kolbenbuchsen, realisiert alle voran genannten technischen Vorteile.

Für das erfindungsgemäße Verfahren und die erfindungsgemäße Verwendung sind somit sämtliche, die für die erfindungsgemäße Kolbenbuchse genannten Aluminiumlegierungen, einschließlich sämtlicher Modifikationen anwendbar. Dies gilt in gleicher Weise für die Verfahrensschritte im Hinblick auf die für die Kolbenbuchse verwendete Aluminiumlegierung.

## Patentansprüche

1. Kolben für einen Verbrennungsmotor, der eine Kolbenbuchse zur Aufnahme eines Kolbenbolzens aufweist, **dadurch gekennzeichnet, dass** die Kolbenbuchse aus einer Aluminiumlegierung der Legierungsserie 2xxx hergestellt ist, wobei die Aluminiumlegierung der Kolbenbuchse
| | |
|---|---|
| Kupfer (Cu) | 1,9 bis maximal 2,7 Gew.-%, |
| Magnesium (Mg) | 1,3 bis maximal 1,8 Gew.-%, |
| Eisen (Fe) | 0,9 bis maximal 1,3 Gew.-%, |
| Nickel (Ni) | 0,9 bis maximal 1,2 Gew.-%, |
| Mangan (Mn) | bis maximal 0,2 Gew.-%, |
| Silizium (Si) | 0,1 bis maximal 0,3 Gew.-%, |
| Titan (Ti) | 0,04 bis maximal 0,1 Gew.-%, |
| Zink (Zn) | bis maximal 0,1 Gew.-%, |
| sowie optional | |
| Zirkonium (Zr) | 0,04 bis maximal 0,15 Gew.-% |
und als Rest Aluminium und nicht zu vermeidende Begleit- und Verunreinigungselemente aufweist.

2. Kolben für einen Verbrennungsmotor nach einem der vorangegangenen Ansprüche, wobei die Summe der Elemente Silizium und Eisen in der Aluminiumlegierung der Kolbenbuchse maximal 0,8 Gew.-% beträgt.

3. Kolben für einen Verbrennungsmotor nach einem der vorangegangenen Ansprüche, wobei die Aluminiumlegierung der Kolbenbuchse eine wärmebehandelte Aluminiumlegierung ist.

4. Kolben für einen Verbrennungsmotor nach Anspruch 3, wobei die Aluminiumlegierung der Kolbenbuchse eine lösungsgeglühte und ausscheidungsgehärtete Aluminiumlegierung ist.

5. Kolben für einen Verbrennungsmotor nach einem der vorangegangenen Ansprüche, wobei die Aluminiumlegierung der Kolbenbuchse eine T6 oder T7 wärmebehandelte Aluminiumlegierung ist.

6. Verfahren zur Herstellung eines Kolbens für einen Verbrennungsmotor mit einer Kolbenbuchse, mit den Schritten:
Stranggießen eines Bolzens aus einer Aluminiumlegierung der Legierungsserie 2xxx, die
| | |
|---|---|
| Kupfer (Cu) | 1,9 bis maximal 2,7 Gew.-%, |
| Magnesium (Mg) | 1,3 bis maximal 1,8 Gew.-%, |
| Eisen (Fe) | 0,9 bis maximal 1,3 Gew.-%, |
| Nickel (Ni) | 0,9 bis maximal 1,2 Gew.-%, |
| Mangan (Mn) | bis maximal 0,2 Gew.-%, |
| Silizium (Si) | 0,1 bis maximal 0,3 Gew.-%, |
| Titan (Ti) | 0,04 bis maximal 0,1 Gew.-%, |
| Zink (Zn) | bis maximal 0,1 Gew.-%, |
| sowie optional | |
| Zirkonium (Zr) | 0,04 bis maximal 0,15 Gew.-% |
und als Rest Aluminium und nicht zu vermeidende Begleit- und Verunreinigungselemente aufweist,
Ziehen eines Rohres aus dem Bolzen,
Wärmebehandlung des Rohres,
Fertigung von Kolbenbuchsen aus dem Rohr,
Feinbearbeitung der Kolbenbuchsen,
zerstörungsfreie Werkstoffprüfung,
Einbau der Kolbenbuchsen in Kolbenbolzenbohrungen und
Feinbearbeitung der Geometrie der Bolzenbohrungen.

7. Verfahren nach Anspruch 6, wobei ferner eine Aluminiumlegierung gemäß einem der Ansprüche 2 bis 5 verwendet wird.

8. Verfahren nach einem der vorangegangen Ansprüche 6 bis 7, wobei die Wärmebehandlung des Rohres eine Wärmebehandlung zur Einstellung eines feinen, sphäroidisierten Mikrogefüges mit den Schritten: Lösungsglühen, Abschrecken und Warmauslagern ist.

9. Verfahren nach einem der vorangegangen Ansprüche 6 bis 8, wobei das Ziehen des Rohres ein Kaltverformungsprozess zur Festigkeitssteigerung ist.

10. Verfahren nach einem der vorangegangen Ansprüche 6 bis 9, wobei der Einbau der Kolbenbuchsen durch Querpressen oder Längspressen erfolgt.

11. Verwendung einer Aluminiumlegierung gemäß einem der Ansprüche 1 bis 5 für eine Kolbenbuchse eines Verbrennungsmotors.

## Claims

1. A piston for an internal combustion engine which has a piston sleeve for receiving a piston pin, **characterised in that** the piston sleeve is produced from an aluminium alloy of alloy series 2xxx, the aluminium alloy of the piston sleeve comprising
| | |
|---|---|
| copper (Cu) | 1.9 to a maximum of 2.7 % by weight, |
| magnesium (Mg) | 1.3 to a maximum of 1.8 % by weight, |
| iron (Fe) | 0.9 to a maximum of 1.3 % by weight, |
| nickel (Ni) | 0.9 to a maximum of 1.2 % by weight, |
| manganese (Mn) | up to a maximum of 0.2 % by weight, |
| silicon (Si) | 0.1 to a maximum of 0.3 % by weight, |
| titanium (Ti) | 0.04 to a maximum of 0.1 % by weight, |
| zinc (Zn) | up to a maximum of 0.1 % by weight, |
| and optionally | |
| zirconium (Zr) | 0.04 to a maximum of 0.15 % by weight, |
and, as the remainder, aluminium and the unavoidable accompanying and impurity elements.

2. The piston for an internal combustion engine according to any of the preceding claims, the sum of the elements silicon and iron in the aluminium alloy of the piston sleeve being maximally 0.8 % by weight.

3. The piston for an internal combustion engine according to any of the preceding claims, the aluminium alloy of the piston sleeve being a heat-treated aluminium alloy.

4. The piston for an internal combustion engine according to Claim 3, the aluminium alloy of the piston sleeve being a solution annealed and precipitation hardened aluminium alloy.

5. The piston for an internal combustion engine according to any of the preceding claims, the aluminium alloy of the piston sleeve being a T6 or T7 heat-treated aluminium alloy.

6. A method for producing a piston for an internal combustion engine having a piston sleeve, comprising the steps:
continuously casting a pin made of an aluminium alloy of alloy series 2xxx which comprises
| | |
|---|---|
| copper (Cu) | 1.9 to a maximum of 2.7 % by weight, |
| magnesium (Mg) | 1.3 to a maximum of 1.8 % by weight, |
| iron (Fe) | 0.9 to a maximum of 1.3 % by weight, |
| nickel (Ni) | 0.9 to a maximum of 1.2 % by weight, |
| manganese (Mn) | up to a maximum of 0.2 % by weight, |
| silicon (Si) | 0.1 to a maximum of 0.3 % by weight, |
| titanium (Ti) | 0.04 to a maximum of 0.1 % by weight, |
| zinc (Zn) | up to a maximum of 0.1 % by weight, |
| and optionally | |
| zirconium (Zr) | 0.04 to a maximum of 0.15 % by weight, |
and, as the remainder, aluminium and the unavoidable accompanying and impurity elements.
drawing a tube from the pin,
heat-treating the tube,
producing piston sleeves from the tube,
fine machining of the piston sleeves,
non-destructive material testing,
insertion of the piston sleeves into piston pin bore holes, and
fine machining of the geometry of the pin bore holes.

7. The method according to Claim 6, an aluminium alloy according to any of Claims 2 to 5 also being used.

8. The method according to either of the preceding Claims 6 to 7, the heat treatment of the tube being heat treatment in order to set a fine, spheroidized microstructure comprising the steps: solution annealing, quenching and artificial ageing.

9. The method according to any of the preceding Claims 6 to 8, the drawing of the tube being a cold forming process for increasing strength.

10. The method according to any of the preceding Claims 6 to 9, the piston sleeves being inserted by transverse pressing or longitudinal pressing.

11. The use of an aluminium alloy according to any of Claims 1 to 5 for a piston sleeve of an internal combustion engine.

## Revendications

1. Piston pour un moteur à combustion qui présente une fourrure de piston pour recevoir un axe de piston, **caractérisé en ce que** :
la fourrure de piston est constituée d'un alliage d'aluminium de la série d'alliages 2 xxx, dans lequel l'alliage d'aluminium de la fourrure de piston présente :
| | |
|---|---|
| du cuivre (Cu) | 1,9 à 2,7 % en poids au maximum |
| du magnésium (Mg) | 1,3 à 1,8 % en poids au maximum, |
| du fer (Fe) | 0,9 à 1,3 % en poids au maximum, |
| du nickel (Ni) | 0,9 à 1,2 % en poids au maximum, |
| du manganèse (Mn) | jusqu'à 0,2 % en poids au maximum, |
| du silicium (Si) | 0,1 à 0,3 % en poids au maximum, |
| du titane (Ti) | 0,04 à 0,1 % en poids au maximum, |
| du zinc (Zn) | jusqu'à 0,1 % en poids au maximum, |
| ainsi qu'éventuellement | |
| du zirconium (Zr) | 0,04 à 0,15 % en poids au maximum |
et pour le reste de l'aluminium et des éléments d'accompagnement et des impuretés inévitables.

2. Piston pour un moteur à combustion selon l'une quelconque des revendications précédentes, dans lequel la somme des éléments silicium et fer dans l'alliage d'aluminium de la fourrure de piston atteint au maximum 0,8 % en poids.

3. Piston pour un moteur à combustion selon l'une quelconque des revendications précédentes, dans lequel l'alliage d'aluminium de la fourrure de piston est un alliage d'aluminium traité à chaud.

4. Piston pour un moteur à combustion selon la revendication 3, dans lequel l'alliage d'aluminium de la fourrure de piston est un alliage d'aluminium recuit en solution et durci par précipitation.

5. Piston pour un moteur à combustion selon l'une quelconque des revendications précédentes, dans lequel l'alliage d'aluminium de la fourrure de piston est un alliage d'aluminium traité à chaud T6 ou T7.

6. Procédé de fabrication d'un piston pour un moteur à combustion avec une fourrure de piston, comprenant les étapes consistant à :
couler en continu un axe constitué d'un alliage d'aluminium de la série d'alliages 2 xxx, qui présente :
| | |
|---|---|
| du cuivre (Cu) | 1,9 à 2,7 % en poids au maximum |
| du magnésium (Mg) | 1,3 à 1,8 % en poids au maximum, |
| du fer (Fe) | 0,9 à 1,3 % en poids au maximum, |
| du nickel (Ni) | 0,9 à 1,2 % en poids au maximum, |
| du manganèse (Mn) | jusqu'à 0,2 % en poids au maximum, |
| du silicium (Si) | 0,1 à 0,3 % en poids au maximum, |
| du titane (Ti) | 0,04 à 0,1 % en poids au maximum, |
| du zinc (Zn) | jusqu'à 0,1 % en poids au maximum, |
| ainsi qu'éventuellement | |
| du zirconium (Zr) | 0,04 à 0,15 % en poids au maximum |
et pour le reste de l'aluminium et des éléments d'accompagnement et des impuretés inévitables,
étirer un tube à partir de l'axe,
traiter à chaud le tube,
fabriquer une fourrure de piston à partir du tube,
usiner finement la fourrure du piston,
tester le matériau de manière non destructive,
incorporer la fourrure de piston dans des alésages de l'axe de piston et
usiner finement la géométrie des alésages de l'axe.

7. Procédé selon la revendication 6, dans lequel un alliage d'aluminium selon l'une quelconque des revendications 2 à 5 est en outre utilisé.

8. Procédé selon l'une quelconque des revendications précédentes 6 à 7, dans lequel le traitement à chaud du tube est un traitement à chaud pour régler une microstructure sphéroïde fine avec les étapes suivantes : recuit en solution, trempe et précipitation à chaud.

9. Procédé selon l'une quelconque des revendications précédentes 6 à 8, dans lequel l'étirage du tube est un procédé de déformation à froid pour augmenter la résistance.

10. Procédé selon l'une quelconque des revendications précédentes 6 à 9, dans lequel l'incorporation de la fourrure de piston se fait par compression transversale ou compression longitudinale.

11. Utilisation d'un alliage d'aluminium selon l'une quelconque des revendications 1 à 5 pour une fourrure de piston d'un moteur à combustion.
